# EUROPÄISCHE PATENTANMELDUNG

(11) **EP 2 716 386 A1**
(43) Veröffentlichungstag der Anmeldung: **09.04.2014**
(21) Anmeldenummer: 12187594.2
(22) Anmeldetag: 08.10.2012
(51) Int. Cl.: B22D 27/04, B22D 27/06, F01D 5/14

(54) **Gasturbinenkomponente, Verfahren zu ihrer Herstellung und Gießform zur Verwendung von diesem Verfahren**

(71) Anmelder: Siemens Aktiengesellschaft, 80333 München (DE)
(72) Erfinder: McDonald, Wayne J., Charlotte, NC, 28273 (US); Ahmad, Fathi, 41564 Kaarst (DE); Paul, Uwe, 40882 Ratingen (DE)

(57) **Zusammenfassung**

Es wird ein Verfahren zum Gießen einer Gasturbinenkomponente (15) mit mindestens einem ersten Abschnitt (A) und einem zweiten Abschnitt (B) zur Verfügung gestellt, in dem ein flüssiges Metall in eine Gießform (1) gegossen wird und ein Erstarren des Metalls mittels kontrollierten Abkühlens herbeigeführt wird. Das Abkühlen des flüssigen Metalls wird im ersten Abschnitt (A) derart kontrolliert, 1 dass das Metall in einer direktional verfestigten Kristallstruktur oder einer einkristallinen Kristallstruktur erstarrt. Im zweiten Abschnitt (B) erfolgt das Abkühlen derart, 1 dass dieser in einer multidirektionalen Kristallstruktur erstarrt.

Außerdem wird eine Gießform zur Verwendung bei der Durchführung des Verfahrens zur Verfügung gestellt.

## Beschreibung

Die vorliegende Erfindung betrifft eine Gasturbinenkomponente sowie ein Verfahren zu ihrer Herstellung. Daneben betrifft die Erfindung eine Gießform, die im Verfahren zur Herstellung der Gasturbinenkomponente zum Einsatz kommen kann.

Gasturbinenkomponente wie bspw. Leit- und Laufschaufeln von Gasturbinen sind im Betrieb einer Gasturbine harschen Bedingungen ausgesetzt. Insbesondere bei Laufschaufeln wirken im Betrieb Zentrifugalkräfte, die eine hohe Kriechfestigkeit des Materials erforderlich machen. Die hohe Kriechfestigkeit muss auch bei den beim Betrieb einer Gasturbine herrschenden Temperaturen vorhanden sein. Insbesondere große Laufschaufeln erfahren hohe Zentrifugalkräfte, die hohe Kriechfestigkeit bei hohen Temperaturen erfordern.

Bei den in den Gasturbinen besonders in den vorderen Stufen herrschenden hohen Temperaturen schwächen vor allem quer zur Hauptbeanspruchungsrichtung verlaufende Korngrenzen im Materialgefüge das Material, so dass durch Beseitigung von Korngrenzen eine höhere Kriechfestigkeit erzielt werden kann. Insbesondere große Gasturbinenkomponenten werden daher zunehmend aus Material mit direktional verfestigtem Gefüge oder einkristallinen Gefüge hergestellt. Unter direktional verfestigtem Gefüge sind hierbei insbesondere kolumnare kristalline Formen zu verstehen, bei denen in einer bestimmten Raumrichtung keine Korngrenzen vorliegen.

Die Herstellung von direktional verfestigten oder einkristallinen Gasturbinenkomponenten erfolgt, indem das Material in eine auf über die Schmelztemperatur des Gießmaterials aufgeheizte Gießform gefüllt wird, wobei die Schmelze des Materials am Boden der Gießform auf eine kälter Stelle trifft und dort eine gerichtete Kornstruktur bildet. Die Form mit dem Material wird dann langsam aus dem heißen Teil des Ofens in einen kälteren Teil des Ofens bewegt, so dass das abkühlende Material die direktional gerichtete Struktur des bereits erstarrten Materials fortführt und somit in einer direktional verfestigten Mikrostruktur oder einer einkristallinen Mikrostruktur erstarrt. Ein entsprechendes Verfahren ist beispielsweise in US 2010/0193150 A1 beschrieben.

Insbesondere bei großen Komponenten erfordert das langsame Bewegen der Gießform aus dem heißen in den kalten Bereich des Ofens jedoch eine entsprechende Zeitspanne, was den Durchsatz bei der Herstellung der Komponenten verringert. Ursache für die lange Zeitspanne ist aber nicht nur die Größe der Komponente, die bei einer gegebenen Bewegungsgeschwindigkeit die für das Herausziehen der Komponente aus dem Ofen benötigte Zeitdauer bestimmt, sondern auch die größere Masse der großen Komponenten, welche die Abkühlungsgeschwindigkeit verringert, was das Erstarren der Komponente selbst verlangsamt.

Aufgabe der vorliegenden Erfindung ist es, ein vorteilhaftes Verfahren zum Herstellen einer Gasturbinenkomponente zur Verfügung zu stellen. Eine weitere Aufgabe der vorliegenden Erfindung ist es, eine Gießform zur Verfügung zu stellen, die im erfindungsgemäßen Verfahren vorteilhaft zum Einsatz kommen kann. Noch eine weitere Aufgabe der vorliegenden Erfindung ist es, eine vorteilhafte Gasturbinenkomponente zur Verfügung zu stellen.

Die erste Aufgabe wird durch ein Verfahren zum Gießen einer Gasturbinenkomponente nach Anspruch 1 gelöst, die zweite Aufgabe durch eine Gießform nach Anspruch 12. Die dritte Aufgabe wird durch eine Gasturbinenkomponente nach Anspruch 10 gelöst. Die abhängigen Ansprüche enthalten vorteilhafte Ausgestaltungen der Erfindung.

Im erfindungsgemäßen Verfahren zum Gießen einer Gasturbinenkomponente mit mindestens einem ersten Abschnitt und einem zweiten Abschnitt wird flüssiges Metall in eine Gießform gegossen und ein Erstarren des Metalls mittels kontrollierten Abkühlens herbeigeführt. Das Abkühlen des flüssigen Metalls im ersten Abschnitt der Gasturbinenkomponente wird dabei derart kontrolliert, dass das Metall in einer direktional verfestigten Kristallstruktur oder in einer einkristallinen Kristallstruktur erstarrt. Im zweiten Abschnitt erfolgt das Abkühlen derart, dass dieser in einer multidirektionalen Kristallstruktur (globulitische oder polykristalline Kristallstruktur) erstarrt.

Die Erfindung beruht auf der Erkenntnis, dass beispielsweise bei einer Gasturbinenlaufschaufel die Kriechfestigkeit bei hoher Temperatur in erster Linie im Bereich des Schaufelblattes durch eine globulitische oder polykristalline Kristallstruktur geschwächt wird. An der Schaufelplattform und am Schaufelfuß herrschen beim Betrieb der Schaufel dagegen niedrigere Temperaturen, bei denen eine globulitische oder polykristalline Kristallstruktur eine gute Kriechfestigkeit unterstützt.

An dieser Stelle setzt das erfindungsgemäße Verfahren an. Indem lediglich ein Abschnitt der Gasturbinenkomponente, beispielsweise das Schaufelblatt einer Turbinenschaufel, einer direktional verfestigten oder einkristallinen Erstarrung unterzogen wird, der zweite Abschnitt dagegen einer multidirektionalen Erstarrung unterzogen wird, kann die Zeitdauer für das Herstellen der Komponente verringert werden, da eine globulitische Erstarrung schneller erfolgen kann, als eine direktional verfestigte oder einkristalline Erstarrung. Derjenige Abschnitt, in dem die multidirektionale Erstarrung erfolgt, kann rasch aus dem heißen in den kälteren Ofenbereich bewegt werden, so dass die für das direktional verfestigte Erstarren bzw. das einkristalline Erstarre benötigte Zeitdauer nicht mehr durch die Abmessung der gesamten Komponente und die Masse der gesamten Komponente bestimmt wird, sondern nur noch durch denjenigen Teil der Komponente, der die hohe Kriechfestigkeit bei hoher Temperatur aufweisen muss. In der beispielhaft angeführten Turbinenschaufel kann somit der Abschnitt mit dem Schaufelfuß und der Schaufelplattform rasch aus dem heißen in den kälteren Ofenbereich bewegt werden, so dass die Dauer des zum Herbeiführen der gerichteten Erstarrung bzw. der einkristallinen Erstarrung benötigte Zeitdauer nur noch durch die Menge und die Masse des Schaufelblattes bestimmt sind.

Insgesamt lässt sich durch das erfindungsgemäße Verfahren die Produktionsdauer zum Herstellen einer Gasturbinenkomponente wie insbesondere einer Turbinenschaufel verringern, ohne dass diejenigen Abschnitte der Komponente, welche hohen Zentrifugalkräften bei hoher Temperatur ausgesetzt sind, geschwächt würden. Durch die reduzierte Herstellungszeit können die Herstellungskosten für die Gasturbinenkomponenten verringert werden.

Wenn ein rasches Entfernen des zweiten Abschnittes aus dem Ofen stattfindet, nachdem die direktional verfestigte Erstarrung bzw. die einkristalline Erstarrung im ersten Abschnitt erfolgt ist, kann die Tendenz bestehen, dass das verbleibende flüssige Metall in den schmalen, massearmen Bereichen zuerst erstarrt, bevor es in den breiteren und massereicheren Bereichen erstarrt. Dies kann zu Bereichen führen, in denen flüssiges Metall von bereits erstarrtem Metall umgeben ist. Wenn dann das endgültige Abkühlen und Erstarren des Metalls stattfindet, führen Volumenänderungen im abkühlenden Metall dazu, dass in den breiten und massereichen Bereichen eine größere Gesamtporosität als in den zuvor erstarrten schmalen und massearmen Bereichen vorliegt.

Um das Auftreten einer erhöhten Gesamtporosität zu vermeiden, kann das erfindungsgemäße Verfahren so weitergebildet sein, dass, wenn der zweite Abschnitt der Gasturbinenkomponente einen massearmen Bereich und einen massereichen Bereich umfasst, dem massereichen Bereich zumindest dann zusätzliches flüssiges Metall zugeführt wird, wenn die direktional verfestigte Kristallstruktur oder die einkristalline Struktur gebildet ist. Mit anderen Worten, zumindest während des raschen Abkühlens beim Herstellen der multidirektional verfestigten Struktur wird dem massereichen Bereich des zweiten Abschnittes zusätzliches flüssiges Metall zugeführt, um die Volumenänderung beim Abkühlen auszugleichen und so das Auftreten einer erhöhten Porosität zu vermeiden.

Das zusätzliche flüssige Metall kann insbesondere in Form eines Reservoirs aus flüssigem Metall, welches an den massereichen Bereich angrenzt, vorgehalten werden. Zudem ist es vorteilhaft, wenn das zusätzliche flüssige Metall durch thermisches Isolieren des Reservoirs lange flüssig gehalten wird. Auf diese Weise kann erreicht werden, dass das Reservoir aus flüssigem Metall lange genug vorhanden ist, um die Volumenänderung im massereichen Bereich des zweiten Abschnittes bis zur Erstarrung ausgleichen zu können. Alternativ oder zusätzlich zur Isolierung kann das zusätzliche flüssige Metall auch flüssig gehalten werden, indem der freien Oberfläche des zusätzlichen flüssigen Metalls im Reservoir ein exothermes Material hinzugefügt wird.

Wenn die Gasturbinenkomponente eine Lauf- oder Leitschaufel ist, ist der erste Abschnitt der Gasturbinenkomponente das Schaufelblatt der Lauf- oder Leitschaufel. Insbesondere dann, wenn die Gasturbinenkomponente eine Laufschaufel ist, kann der zweite Abschnitt den Schaufelfuß und die Schaufelplattform einschließen, wobei der massereiche Bereich und der massearme Bereich beide Teil des Schaufelfußes sind und sich der massearme Bereich zwischen dem massereichen Bereich und der Plattform befindet. Das Zuführen des zusätzlichen flüssigen Metalls kann dabei zu Seitenflächen des massereichen Bereichs oder zu einer Endfläche des massereichen Bereichs, die das dem Schaufelblatt abgewandte Ende der Laufschaufel darstellt, erfolgen.

Mit dem erfindungsgemäßen Verfahren lässt sich eine erfindungsgemäße Gasturbinenkomponente mit einem ersten Abschnitt und einem zweiten Abschnitt, der Integral mit dem ersten Abschnitt ausgebildet ist, herstellen. Der erste Abschnitt weist eine direktional verfestigte oder eine einkristalline Kristallstruktur auf, wohingegen der zweite Abschnitt eine multidirektional verfestigte Kristallstruktur aufweist. Die Gasturbinenkomponente kann beispielsweise als Leitschaufel oder insbesondere als Laufschaufel ausgebildet sein, wobei der erste Abschnitt vom Schaufelblatt gebildet ist.

Das erfindungsgemäße Gasturbinenbauteil bietet den Vorteil, dass es rascher produziert werden kann, da nur diejenigen Abschnitte, welche im Betrieb den hohen Temperaturen ausgesetzt sind und die daher hohe Kriechfestigkeit bei hohen Temperaturen aufweisen müssen, in einem langwidrigen Verfahren direktional verfestigt oder einkristallin erstarren. Die übrigen Abschnitte können hingegen rascher in multidirektional verfestigter Weise erstarren.

Eine erfindungsgemäße Gießform zum Gießen einer Gasturbinenkomponente mittels des erfindungsgemäßen Verfahrens umfasst zumindest einen ersten Gießformabschnitt zum Formen des ersten Abschnitts der Gasturbinenkomponente und einen zweiten Gießformabschnitt zum Formen des zweiten Abschnittes der Gasturbinenkomponente. Darüber hinaus umfasst die Gießform einen Zufuhrkanal, der mit dem zweiten Gießformabschnitt kommuniziert, um eine Zufuhr von zusätzlichem flüssigem Metall in den zweiten Gießformabschnitt zu ermöglichen. Dadurch, dass die Zufuhr von zusätzlichem flüssigen Metall in den zweiten Gießformabschnitt ermöglicht wird, lässt sich vermeiden, dass beim raschen Abkühlen des zweiten Gießformabschnittes die zuvor erwähnten Volumenänderungen zu einer erhöhten Porosität des erstarrten Metalls im zweiten Gießformabschnitt führen.

In einer Weiterbildung der erfindungsgemäßen Gießform weist der Zufuhrkanal ein Volumen zum Aufnehmen eines Reservoirs an flüssigem Metall auf. Die Gießform kann dabei dort, wo sich der Zufuhrkanal befindet, thermisch isoliert sein, um das Reservoir an flüssigem Metall möglichst lange flüssig zu halten.

In der erfindungsgemäßen Gießform kann der zweite Gießformabschnitt einen Formbereich mit einem engen Zwischenraum zum Formen des massearmen Bereichs der Gasturbinenkomponente und einen Gießformbereich mit einem weiten Zwischenraum zum Formen des massereichen Bereichs der Gasturbinenkomponente umfassen. Der Zufuhrkanal führt dann zum Gießformbereich mit dem breiten Zwischenraum. Im Bereich des breiten Zwischenraums ist die oben beschriebene Problematik der erhöhten Porosität im erstarrten Material aufgrund der Volumenänderung bei der Erstarrung am gravierendsten. Die Zufuhr des zusätzlichen flüssigen Metalls erfolgt daher vorzugsweise in den Gießformbereich mit dem breiten Zwischenraum.

Wenn die Gasturbinenkomponente eine Lauf- oder Leitschaufel ist, kann der erste Gießformabschnitt insbesondere eine Kontur zum Formen des Schaufelblattes aufweisen. In der Regel stellt das Schaufelblatt den bei hohen Temperaturen am meisten beanspruchten Abschnitt der Turbinenschaufel dar, so dass dieser Abschnitt in einer einkristallinen oder direktional verfestigten Kristallstruktur hergestellt wird.

Insbesondere dann, wenn die Gasturbinenkomponente eine Laufschaufel ist, kann der zweite Gießformabschnitt einen Schaufelfußgießformabschnitt zum Formen des Schaufelfußes und einen Plattformgießformabschnitt zum Formen der Schaufelplattform einschließen. Der Gießformbereich mit dem engen Zwischenraum und der Gießformbereich mit dem weiten Zwischenraum sind dann beide Teil des Schaufelfußgießformabschnittes, wobei sich der Gießformbereich mit dem engen Zwischenraum zwischen dem Gießformbereich mit dem breiten Zwischenraum und dem Plattformgießformabschnitt befindet. Diese Ausgestaltung der Gießform führt dazu, dass das zusätzliche flüssige Metall denjenigen Bereichen der Laufschaufel zugeführt wird, in denen die Neigung zur Bildung einer erhöhten Porosität am größten ist, nämlich dem massereichen Teil des Schaufelfußes. Die Zufuhröffnungen zum Zuführen des zusätzlichen flüssigen Metalls können insbesondere zu Gießformseitenflächen des Gießformbereichs mit dem breiten Zwischenraum führen oder zu einer Gießformendfläche des Gießformbereiches mit dem breiten Zwischenraum, wobei die Endfläche die dem Schaufelblatt abgewandte Endfläche des Schaufelfußes definiert.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
Figur 1 zeigt ein erstes Ausführungsbeispiel für eine erfindungsgemäße Gießform in einer Schnittansicht.
Figur 2 zeigt die Gießform aus Fig. 1 in einer Seitenansicht.
Figur 3 zeigt ein Ablaufdiagramm des erfindungsgemäßen Verfahrens.
Figur 4 zeigt eine Gasturbinenschaufel als Ausführungsbeispiel für die erfindungsgemäße Gasturbinenkomponente.
Figur 5 zeigt ein zweites Ausführungsbeispiel für die erfindungsgemäße Gießform in einer Schnittansicht.
Figur 6 die Gießform aus Fig. 5 in einer Seitenansicht.
Figur 7 zeigt beispielhaft eine Gasturbine in einem Längsteilschnitt.
Figur 8 zeigt in perspektivischer Ansicht eine Laufschaufel oder Leitschaufel einer Strömungsmaschine.
Figur 9 zeigt eine Brennkammer einer Gasturbine.

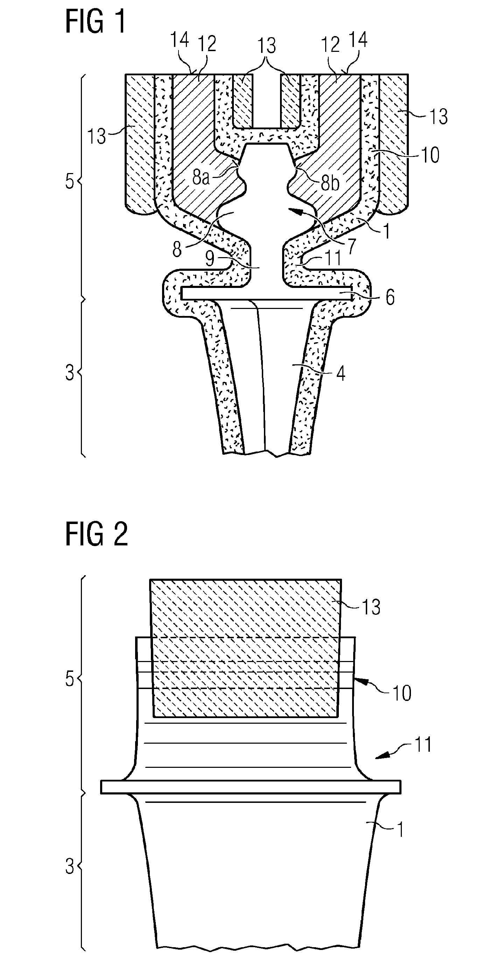

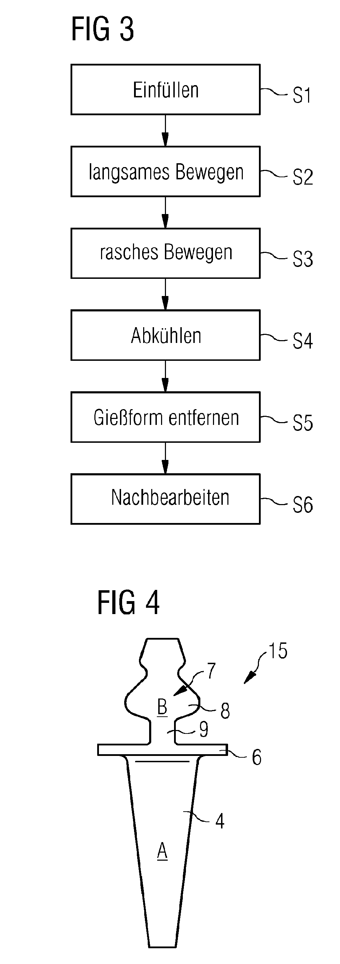

Ein erstes Ausführungsbeispiel für eine erfindungsgemäße Gießform wird nachfolgend mit Bezug auf die Fig. 1 und 2 beschrieben, bevor dann mit Bezug auf Fig. 3 das Durchführen des erfindungsgemäßen Gießverfahrens unter Verwendung der erfindungsgemäßen Gießform beschrieben wird.

Das in den Fig. 1 und 2 gezeigte Ausführungsbeispiel für eine erfindungsgemäße Gießform zeigt eine Gießform zum Gießen einer Gasturbinenlaufschaufel. Die Gießform 1 umfasst einen ersten Gießformabschnitt 3 zum Formen des Schaufelblattes 4 der zu gießenden Turbinenschaufel und einen zweiten Gießformabschnitt 5 zum Formen der Schaufelplattform 6 und des Schaufelfußes 7 der zu gießenden Turbinenschaufel. Das Schaufelblatt stellt dabei einen ersten Abschnitt der Gasturbinenkomponente dar, der in einer direktional verfestigten Struktur, auch kurz DS-Struktur genannt, gegossen werden soll. Statt mit einer direktional verfestigten Kristallstruktur kann das Schaufelblatt auch mit einer einkristallinen Kristallstruktur erzeugt werden. Die Schaufelplattform 6 und der Schaufelfuß 7 stellen einen zweiten Abschnitt der Gasturbinenkomponente dar, bei dem ein Erstarren des flüssigen Metalls in einer direktional verfestigten Struktur nicht erforderlich ist. Dieser Abschnitt stellt daher einen Abschnitt mit dar, in dem das flüssiges Metall in einer multidirektionalen Struktur erstarren kann.

Der Schaufelfuß 7 weist einen breiten massereichen Bereich 8 und einen schmalen, massearmen Bereich 9 auf, der sich zwischen dem massereichen Bereich 8 des Schaufelfußes 7 und der Schaufelplattform 6 befindet. Entsprechend weist der zweite Gießformabschnitt 5 einen Gießformbereich 10 mit einem weiten Zwischenraum zum Formen des breiten, massereichen Bereiches 8 des Schaufelfußes 7 sowie einen Gießformbereich 11 mit einem engen Zwischenraum zum Formen des schmalen, massearmen Bereiches 9 des Schaufelfußes 7 auf.

Die Gießform 1 umfasst zudem wenigstens einen Zufuhrkanal 12, der zum Gießformbereich 10 mit dem weiten Zwischenraum führt und während des Gießprozesses der Zufuhr zusätzlichen flüssigen Metalls in den Gießformbereich 10 mit dem weiten Zwischenraum dient. Im vorliegenden Ausführungsbeispiel sind zwei Zufuhrkanäle 12 vorhanden, die zu den Seitenflächen 8a, 8b des breiten, massereichen Bereiches 8 des Schaufelfußes 7 führen. Mit anderen Worten, die Zufuhrkanäle 12 führen zu Gießformseitenflächen 10 des Gießformbereiches mit weitem Zwischenraum. Diese Zufuhrkanäle 12 sind in ihren Volumen derart ausgelegt, dass sie als Reservoir für das flüssige Metall dienen können. Außerdem ist die Gießform 1 im Bereich des Reservoirs mit einer thermischen Isolierung 13 versehen, die im vorliegenden Ausführungsbeispiel an der Außenseite der Gießform 1 angebracht ist. Alternativ kann die Isolierung aber auch an der Innenseite der Gießform angebracht sein, oder das Material der Gießform kann im Bereich der Zufuhrkanäle 12 eine höhere Isolierfähigkeit aufweisen als in anderen Bereichen der Gießform.

Das erfindungsgemäße Gießverfahren wird nachfolgend mit Bezug auf Fig. 3, die ein Ablaufdiagramm des Gießverfahrens darstellt, näher erläutert.

In einem ersten Schritt S1 des erfindungsgemäßen Verfahrens wird flüssiges Metall in die Gießform 1 eingefüllt. Die Gießform befindet sich dabei in einem speziellen Ofen, der in vertikaler Anordnung eine heiße Zone und einen darunter angeordneten kältere Zone aufweist und in dem die Gießform kontinuierlich mit kontrollierter Geschwindigkeit von der heißen in die kältere Zone bewegt werden kann. Dabei kommt es lediglich auf die Relativbewegung zwischen der Gießform und der heiß/kalt-Grenze des Ofens an, d.h. das Bewegen der gefüllten Gießform 1 aus dem heißen in den kälteren Bereich des Ofens kann durch Bewegen der Gießform selbst, durch Bewegen der heiß/kalt-Grenze des Ofens bei stationärer Gießform oder durch Bewegen sowohl der Gießform als auch der heiß/kalt-Grenze des Ofens erfolgen.

Das Befüllen der Gießform mit Metall erfolgt dabei im vorliegenden Ausführungsbeispiel derart, dass nicht nur die Gießform 1 selbst, sondern auch das von den Zufuhrkanälen 12 gebildeten Reservoir mit flüssigem Metall befüllt wird. Nachdem die Gießform 1 mit dem flüssigen Metall befüllt worden ist, erfolgt in Schritt S2 ein langsames Bewegen des zur Bildung des Schaufelblattes 2 ausgebildeten Gießformabschnittes 3 aus dem heißen in den kälteren Bereich des Ofens. Beispielsweise kann das Herausbewegen so erfolgen, dass zuerst die Schaufelblattspitze aus dem heißen in den kälteren Bereich des Ofens bewegt wird, so dass im Bereich der Schaufelspitze eine Erstarrung des flüssigen Metalls herbeigeführt wird. Die Bewegungsgeschwindigkeit, die Temperaturverteilung im Ofen sowie die Geißformstruktur im Schaufelspitzenbereich sind dabei so gewählt, dass dieses Erstarren in einer direktional verfestigten Kristallstruktur oder einer einkristallinen Struktur erfolgt. Durch weiteres kontrolliertes langsames Bewegen des ersten Gießformabschnittes aus dem heißen in den kälteren Bereich des Ofens wird erreicht, dass sich die Erstarrungsfront im flüssigen Metall in Richtung auf die Schaufelplattform 6 bewegt und dabei die Kristallstruktur des bereits erstarrten Metallanteils übernimmt und fortführt. Auf diese Weise kann durch langsames Bewegen des ersten Gießformabschnittes 3 aus dem heißen in den kälteren Bereich des Ofens erreicht werden, dass das gesamte Schaufelblatt 4 aus einer direktional verfestigten oder einer einkristallinen Kristallstruktur besteht, wenn das Metall im Schaufelblattbereich erstarrt ist.

Nachdem die direktionale Verfestigung des Metalls im ersten Gießformabschnitt 3 erfolgt ist, kann in einem nächsten Schritt S3 der zweite Gießformabschnitt 5, der zum Bilden der Schaufelplattform 6 und Schaufelfußes 7 dient, rascher aus dem heißen in den kälteren Bereich des Ofens bewegt werden, als dies beim ersten Gießformabschnitt 3 der Fall war. Als Konsequenz des rascheren Herausbewegens erfolgt nun nicht mehr ein kontrolliertes langsames Erstarren in einer direktional verfestigten oder einer einkristallinen Kristallstruktur, sondern in einer multidirektionalen Kristallstruktur. Die bei einer solchen multidirektionalen Kristallstruktur auftretenden Korngrenzen sind dabei nicht störend, da die multidirektionale Kristallstruktur bei den im Betrieb der Turbinenschaufel an der Schaufelplattform und dem Schaufelfuß herrschenden Temperaturen die Kriechfestigkeit der Schaufelplattform und des Schaufelfußes unterstützt. Durch das raschere Bewegen aus dem heißen in den kälteren Bereich des Ofens und die daraus folgende raschere Erstarrung des flüssigen Metalls im zweiten Gießformbereich kann die Herstellungsdauer der Gasturbinenschaufel, und damit die Produktionskosten, gesenkt werden.

Das rascher Bewegen des zweiten Gießformabschnittes 5 aus dem heißen in den kälteren Bereich des Ofen in Schritt S3 bringt jedoch auch die Tendenz mit sich, dass das Metall im Gießformbereich 11 mit dem engen Zwischenraum, in dem sich wenig Masse an flüssigem Metall befindet, rascher erstarrt, als im Gießformbereich 10 mit dem weiten Zwischenraum, in dem sich mehr Masse an flüssigem Metall befindet. Dies kann zu eingeschlossenen Volumina mit flüssigem Metall führen, die von der Gießform bzw. bereits erstarrtem Metall begrenzt sind. Wenn diese Volumina schließlich als letztes erstarren, können sie aufgrund der mit der Erstarrung verbundenen Volumenverminderung des Metalls eine höhere Gesamtporosität als die übrigen Bereiche des Schaufelfußes bzw. der Schaufelplattform aufweisen. Um diesen unerwünschten Effekt zu vermeiden, befindet sich in den von den Zufuhrkanälen 12 gebildeten Reservoirs zumindest während des Abkühlens des flüssigen Metalls im zweiten Gießformabschnitt 5 zusätzliches flüssiges Metall, welches dem Gießformbereich 10 mit dem weiten Zwischenraum zugeführt wird, um die beim Abkühlen auftretende Volumenreduzierung durch zusätzliches Material auszugleichen und somit der Bildung einer erhöhten Gesamtporosität entgegenzuwirken (Schritt S4).

Mit Hilfe der thermischen Isolierung 13 der Gießform 1, dort wo sich die Zufuhrkanäle 12 befinden, kann erreicht werden, dass das flüssige Metall im Reservoir lange genug flüssig gehalten wird, bis der massereiche Bereich 8 des Schaufelfußes 7 völlig erstarrt ist. Zusätzlich oder alternativ kann durch Einsatz eines exothermen Materials auf der freien Oberfläche des flüssigen Metalls im Reservoir die nötige Wärme zum Flüssighalten des Metalls im Reservoir zugeführt werden.

Nachdem das Abkühlen und Erstarren des im zweiten Gießformabschnittes 5 befindlichen Metalls erfolgt ist, kann in Schritt S5 die Gießform entfernt werden.

Nach dem Entfernen der Gießform im Schritt S5 kann dann in Schritt S6 eine Nachbearbeitung des Schaufelfußes 7 erfolgen, um die Sollkontur des Schaufelfußes herzustellen.

Im beschriebenen Verfahren reicht es aus, wenn sich das zusätzlich flüssige Metall während des Abkühlens des Metalls im zweiten Gießformabschnitt 5, also im Schritt S4, im Reservoir befindet. Typischerweise wird es aber bereits beim Befüllen in der im Ofen befindlichen heißen Gießform in das Reservoir eingefüllt, um ein nachträgliches Befüllen des Reservoirs, und somit einen zweiten Befüllungsvorgang, zu vermeiden.

Das Ergebnis des erfindungsgemäßen Verfahrens ist eine Turbinenschaufel 15, wie sie in Fig. 4 schematisch dargestellt ist. Diese weist ein Schaufelblatt 4 auf, das eine direktional verfestigte Kristallstruktur, also eine sogenannte kolumnare Kristallstruktur mit Körnern, die über die gesamte Länge des Werkstückes verlaufen, oder eine einkristalline Kristallstruktur aufweist. Die Schaufelplattform 6 und der Schaufelfuß 7 weisen dagegen eine multidirektionale Kristallstruktur, d.h. eine polykristalline bzw. globulitische Kristallstruktur, auf. Damit hat die Turbinenschaufel dort, wo besondere Anforderungen an die Kriechfestigkeit bei hohen Temperaturen zu stellen sind, nämlich im Bereich des Schaufelblattes 7, eine hohe Kriechfestigkeit bei den dort im Betrieb herrschenden Temperaturen, wohingegen im Bereich der Schaufelplattform 6 und des Schaufelfußes 4 die Anforderungen an die Kriechfestigkeit bei den im Betrieb dort im Vergleich zum Schaufelblatt herrschenden niedrigeren Temperaturen durch die multikristalline Kristallstruktur unterstützt werden.

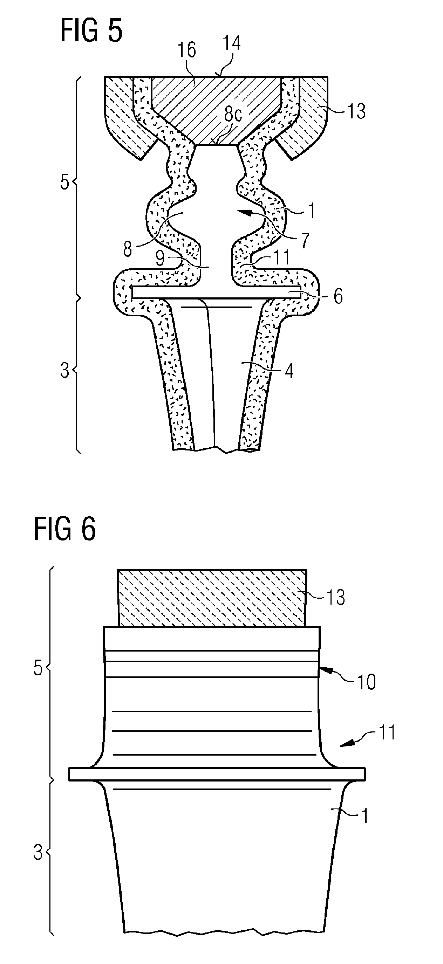

Ein zweites Ausführungsbeispiel für eine erfindungsgemäße Gießform, die in einem Verfahren, wie es mit Bezug auf Fig. 3 beschrieben worden ist, Verwendung finden kann, wird nachfolgend mit Bezug auf die Figuren 5 und 6 beschrieben.

Elemente, die der Gießform aus den Figuren 1 und 2 entsprechen, sind dabei mit denselben Bezugsziffern wie in Figuren 1 und 2 bezeichnet und werden nicht noch einmal erläutert, um Wiederholungen zu vermeiden.

Die in den Figuren 5 und 6 gezeigte Gießform unterscheidet sich von der in den Figuren 1 und 2 gezeigten Gießform in der Anordnung des Zufuhrkanals für das zusätzliche flüssige Metall. Während im ersten Ausführungsbeispiel der Gießform zwei Zufuhrkanäle vorhanden sind, die von der Seite her in den Gießformbereich 10 zum Formen des massereichen Schaufelfußabschnittes 8 münden, ist im Ausführungsbeispiel aus den Figuren 5 und 6 lediglich ein Zufuhrkanal 16 vorhanden, der zur Stirnfläche des den Schaufelfuß bildenden Bereiches der Gießform 1 führt. Diese Stirnfläche bildet in der fertigen Turbinenschaufel die dem Schaufelblatt 5 abgewandte Endfläche 8c des Schaufelfußes 7. Im Vergleich zu der in den Figuren 1 und 2 gezeigten Lösung, in der die Zufuhr des zusätzlichen flüssigen Metalls aus dem Reservoir zu den Seitenflächen 8a, 8b des Schaufelfußes erfolgte, bietet die in den Fig. 5 und 6 gezeigte Lösung den Vorteil, dass die Endfläche 8c eine einfachere Kontur als die Seitenflächen 8a, 8b aufweist und daher die Endkontur nach dem Entfernen der Gießform mit weniger Aufwand herstellbar ist.

Die vorliegende Erfindung wurde anhand von konkreten Ausführungsbeispielen zu Erläuterungszwecken detailliert beschrieben. Es sind jedoch Abweichungen von den beschriebenen Ausführungsbespielen möglich, weshalb die Erfindung nicht auf Merkmale der Ausführungsbespiele beschränkt sein soll, sondern lediglich durch die beigefügten Ansprüche. Beispielsweise besteht die Möglichkeit, das flüssige Metall des Reservoirs nicht großflächig dem massereichen Bereich des Schaufelfußes 7 hinzuzuführen, sondern rasterartig. Hierzu kann beispielsweise das Reservoir 16 aus Fig. 5 durch eine Keramikschicht von der Endfläche 17 getrennt sein, wobei die Keramikschicht rasterartig angeordnete Durchbrechungen aufweist, um einen Durchfluss des flüssigen Metalls in den massereichen Bereich 8 des Schaufelfußes zu ermöglichen. Eine ähnliche Lösung ist selbstverständlich auch bei dem in den Figuren 1 und 2 dargestellten Ausführungsbeispiel möglich. Auch andere Anordnungen der Zufuhrkanäle als sie in den Figuren gezeigt sind, sind möglich, so lange sie nicht das langsame Herausbewegen des ersten Gießformabschnittes aus dem Ofen beim Herstellen der direktional verfestigten oder einkristallinen Kristallstruktur behindern.

Nachfolgend wird eine Gasturbine mit Turbinenkomponenten beschrieben, die Komponenten enthält, welche mit dem erfindungsgemäßen Verfahren herstellbar sind.

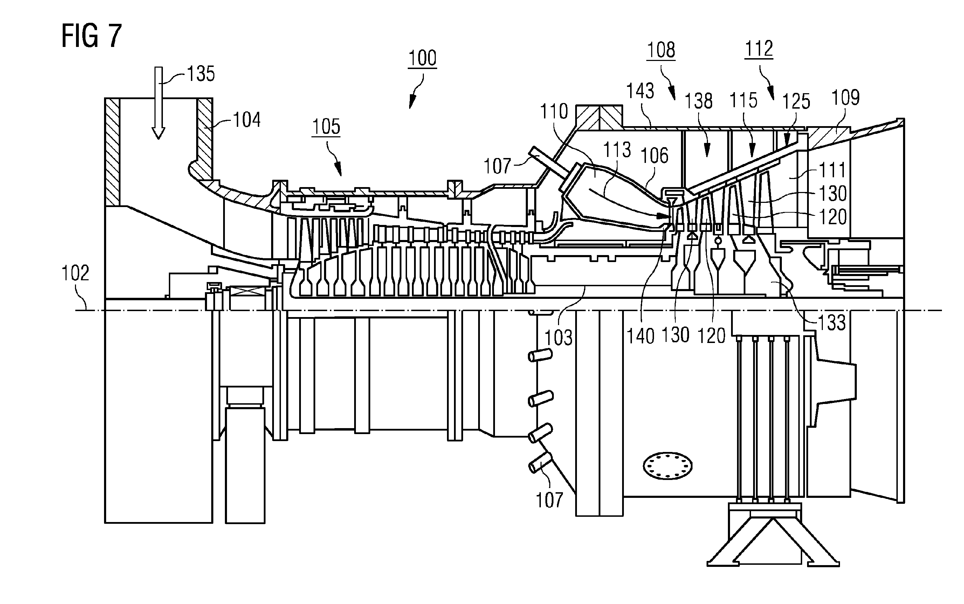

Die Figur 7 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus Zr02, Y203-Zr02, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

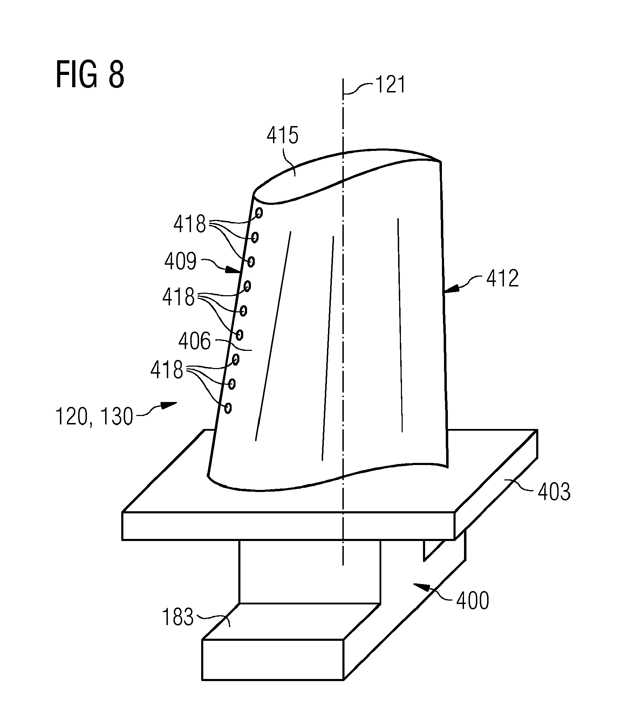

Die Figur 8 zeigt in perspektivischer Ansicht eine Laufschau-fel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampf¬turbine oder ein Kompressor sein.

Die Schaufel 120, 130 weist entlang der Längsachse 121 auf¬einander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufel¬spitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwal¬benschwanzfuß sind möglich.

Die Schaufel 120, 130 weist für ein Medium, das an dem Schaufelblatt 406 vorbeiströmt, eine Anströmkante 409 und eine Ab¬strömkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus Zr02, Y203-Zr02, d.h. sie ist nicht, teilweise oder vollständig stabilisiert durch Yttrium¬oxid und/oder Kalziumoxid und/oder Magnesiumoxid. Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plas¬maspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

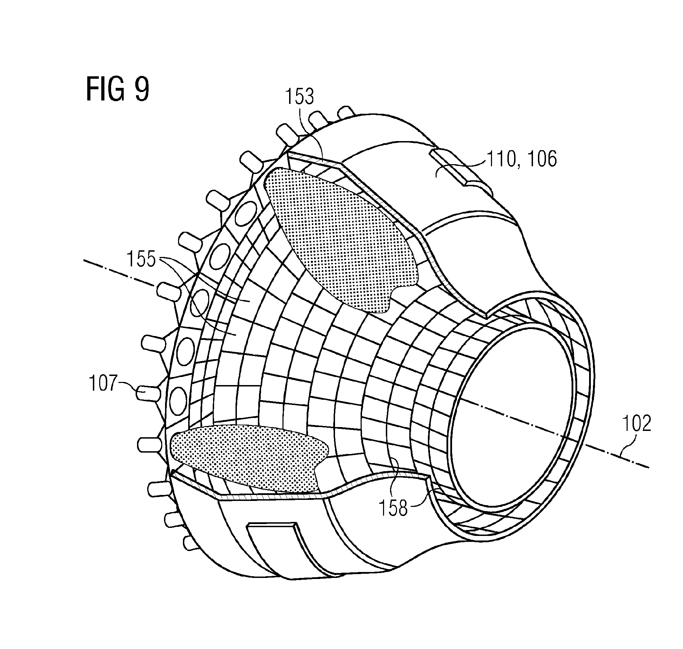

Die Figur 9 zeigt eine Brennkammer 110 einer Gasturbine. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000 C bis 1600 C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus Zr02, Y203-Zr02, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Verfahren zum Gießen einer Gasturbinenkomponente (15) mit mindestens einem ersten Abschnitt (A) und einem zweiten Abschnitt (B), in dem ein flüssiges Metall in eine Gießform (1) gegossen wird und ein Erstarren des Metalls mittels kontrollierten Abkühlens herbeigeführt wird, wobei das Abkühlen des flüssigen Metalls im ersten Abschnitt (A) derart kontrolliert wird, dass das Metall in einer direktional verfestigten Kristallstruktur oder einer einkristallinen Kristallstruktur erstarrt, und im zweiten Abschnitt (B) das Abkühlen derart erfolgt, dass dieser in einer multidirektionalen Kristallstruktur erstarrt.

2. Verfahren nach Anspruch 1,
in dem der zweite Abschnitt (B) der Gasturbinenkomponente (15) einen massearmen Bereich (9) und einen massereichen Bereich (8) umfasst und dem massereichen Bereich (8) zumindest dann zusätzliches flüssiges Metall zugeführt wird, wenn die direktional verfestigte oder einkristalline Kristallstruktur gebildet ist.

3. Verfahren nach Anspruch 2,
in dem das zusätzliche flüssige Metall in Form eines Reservoirs aus flüssigem Metall, das an den breiten Bereich (8) angrenzt, vorgehalten wird.

4. Verfahren nach Anspruch 3,
in dem das zusätzliche flüssige Metall durch thermisches Isolieren (13) des Reservoirs flüssig gehalten wird.

5. Verfahren nach Anspruch 3 oder Anspruch 4,
in dem das zusätzliche flüssige Metall flüssig gehalten wird, indem der freien Oberfläche (14) des zusätzlichen flüssigen Metalls im Reservoir ein exothermes Material hinzugefügt wird.

6. Verfahren nach einem der Ansprüche 1 bis 5,
in dem die Gasturbinenkomponente (15) eine Lauf- oder Leitschaufel ist und der erste Abschnitt (A) das Schaufelblatt (4) der Lauf- oder Leitschaufel ist.

7. Verfahren nach Anspruch 6, in dem
- die Gasturbinenkomponente (15) eine Laufschaufel ist,
- der zweite Abschnitt (B) den Schaufelfuß (7) und die Schaufelplattform (6) einschließt,
- der massereiche Bereich (8) und der massearme Bereich (9) beide Teil des Schaufelfußes (7) sind und,
- sich der massearme Bereich (9) zwischen dem massereichen Bereich (8) und der Plattform (6) befindet.

8. Verfahren nach Anspruch 7,
in dem der massereiche Bereich (8) Seitenflächen (8a, 8b) umfasst und das zusätzliche flüssige Metall den Seitenflächen (8a, 8b) des massereichen Bereichs (8) zugeführt wird.

9. Verfahren nach Anspruch 7,
in dem der massereichen Bereich (8) eine Endfläche (8c) umfasst, die das dem Schaufelblatt (4) abgewandte Ende der Laufschaufel (15) darstellt, und in dem das zusätzliche flüssige Metall der Endfläche (8c) zugeführt wird.

10. Gasturbinenkomponente (15) mit einem ersten Abschnitt (A) und einem zweiten Abschnitt (B), der integral mit dem ersten Abschnitt (A) ausgebildet ist, wobei der erste Abschnitt (A) eine direktional verfestigte Kristallstruktur oder eine einkristalline Kristallstruktur aufweist und der zweite Abschnitt (B) eine multidirektional verfestigte Kristallstruktur aufweist.

11. Gasturbinenkomponente (15) nach Anspruch 10,
die als Lauf- oder Leitschaufel ausgebildet ist, in der der erste Abschnitt (A) vom Schaufelblatt (4) gebildet ist.

12. Gießform (1) zum Gießen einer Gasturbinenkomponente (15) mittels des Verfahrens nach einem der Ansprüche 1 bis 9, welche zumindest einen ersten Gießformabschnitt (3) zum Formen des ersten Abschnitts (A) der Gasturbinenkomponente (15), einen zweiten Gießformabschnitt (5) zum Formen des zweiten Abschnitts (B) der Gasturbinenkomponente (15) und einen Zufuhrkanal (12, 16), der mit dem zweiten Gießformabschnitt (5) kommuniziert, um eine Zufuhr von zusätzlichem flüssigen Metall in den zweiten Gießformabschnitt (5) zu ermöglichen, aufweist.

13. Gießform (1) nach Anspruch 12,
in dem der Zufuhrkanal (12, 16) ein Volumen zum Aufnehmen eines Reservoirs an flüssigem Metall umfasst.

14. Gießform (1) nach Anspruch 12 oder Anspruch 13,
in dem die Gießform (1) dort, wo sich der Zufuhrkanal (12, 16) befindet, eine thermische Isolierung (13) aufweist.

15. Gießform (1) nach einem der Ansprüche 12 bis 14,
in der der zweite Gießformabschnitt (5) einen Gießformbereich (11) mit einem engen Zwischenraum zum Formen des massearmen Bereichs (9) der Gasturbinenkomponente (15) und einen Gießformbereich (10) mit einem weiten Zwischenraum zum Formen des massenreichen Bereiches (8) der Gasturbinenkomponente (15) umfasst und in der der Zufuhrkanal (12, 16) zum Gießformbereich (10) mit dem weiten Zwischenraum führt.

16. Gießform (1) nach einem der Ansprüche 12 bis 15,
in der
- die Gasturbinenkomponente (15) eine Lauf- oder Leitschaufel ist und
- der erste Gießformabschnitt (3) eine Kontur zum Formen des Schaufelblattes (4) aufweist.

17. Gießform (1) nach Anspruch 15 und Anspruch 16,
in der
- die Gasturbinenkomponente (15) eine Laufschaufel ist,
- der zweite Gießformabschnitt (5) einen Schaufelfußgießformabschnitt zum Formen des Schaufelfußes (7) und einen Plattformgießformabschnitt zum Formen der Schaufelplattform (6) einschließt,
- der Gießformbereich (11) mit dem engen Zwischenraum und der Gießformbereich (10) mit dem weiten Zwischenraum beide Teil des Schaufelfußgießformabschnittes sind und,
- sich der Gießformbereich (11) mit dem engen Zwischenraum zwischen dem Gießformbereich (10) mit dem weiten Zwischenraum und dem Plattformgießformabschnitt befindet.

18. Gießform (1) nach Anspruch 17,
in der der Gießformbereich (10) mit dem weiten Zwischenraum Gießformseitenflächen aufweist und in der Zufuhrkanäle (12) zu den Gießformseitenflächen des Gießformbereiches (10) mit dem weiten Zwischenraum führen.

19. Gießform (1) nach Anspruch 17,
in der der Gießformbereich (10) mit dem weiten Zwischenraum eine Gießformendfläche zum Definieren der dem Schaufelblatt abgewandten Endfläche (8c) des Schaufelfußes umfasst und der wenigstens eine Zufuhrkanal (16) zur Gießformendfläche führt.
